# EUROPÄISCHE PATENTSCHRIFT

(11) **EP 1 271 995 B1**
(45) Veröffentlichungstag und Bekanntmachung des Hinweises auf die Patenterteilung: **17.11.2010**
(21) Anmeldenummer: 02013542.2
(22) Anmeldetag: 18.06.2002
(51) Int. Cl.: H04Q 11/04

(54) **Verfahren und Anlage zur Ansteuerung einer Vielzahl von in Bündeln zusammengefassten Nutzkanälen**
Method and device for controlling multiple bearer channels of a trunk link
Procédé et appareil pour contrôler une multitude de canaux porteurs sur une jonction

(30) Priorität: 18.06.2001 DE 10129293
(43) Veröffentlichungstag der Anmeldung: 02.01.2003
(73) Patentinhaber: Tenovis GmbH & Co. KG, 60326 Frankfurt am Main (DE)
(72) Erfinder: Rauth, Hermann, 46145 Oberhausen (DE); Kayser, Udo, 42285 Wuppertal (DE); Pohler, Walter, 41564 Karst (DE)
(74) Vertreter: Tergau & Pohl Patentanwälte

(56) Entgegenhaltungen:
- EP-A1- 0 645 702
- DE-A1- 3 328 574
- DE-A1- 3 642 003
- DE-A1- 3 642 849
- US-A- 6 141 343

## Beschreibung

Seit Einführung der digitalen Vermittlung von Verbindungsleitungen übernimmt die Zeichengabe eine entscheidende Rolle in einer Telekommunikationsanlage. Der Bearbeitungsaufwand für eine gesicherte Zeichengabe - Informationsaustausch und Abwicklung von Übertragungsprotokollen zwischen Telekommunikationsanlagen - ist in Systemen mit zentraler Steuerungsstruktur nur bei kleinen und mittleren Ausbaustufen zu bewältigen. Bei großen Systemen lassen sich die höheren Anforderungen an die Zeichengabe nur durch dezentral angeordnete Substeuerungen durchführen. Im vermehrten Ausmaß werden ISDN-Anschlußleitungen, im folgenden Anschlußorgane, häufig zusätzlich auf verschiedene Substeuerungen verteilt.

Unter dem Gesichtspunkt einer verteilten Steuerung ist dabei auch die Verwaltung weiterer Ressourcen zu betrachten. Zu diesen Ressourcen zählen einerseits die Nutzkanäle, die physikalisch einem speziellen Leitungsanschluß zugeordnet sind und durch dessen Eigenschaften je Anschluß in ihrer Anzahl begrenzt sind. Häufig sind jedoch, bedingt durch hohes Verkehrsaufkommen, mehr Nutzkanäle zwischen zwei Telekommunikationsanlagen erforderlich, als eine einzelne Leitungsschnittstelle bietet. Die Leitungsschnittstelle dient dabei als Schnittstelle zwischen der Telekommunikationsanlage und einem Endgerät.

Leitungsschnittstellen sind auf mehrere Substeuerungen verteilt, die mit einem zentralen Steuerwerk verbunden sind. Aus diesem Grund werden daher Nutzkanäle in Bündeln zusammengefaßt, die von dem zentralen Steuerwerk verwaltet werden. Ein Bündel stellt dabei eine logische Zusammenfassung eines oder mehrerer physikalischer Nutzkanäle zu einer Verwaltungseinheit dar.

Hierbei können die Nutzkanäle eines Bündels alle einer einzigen Leitungsschnittstelle angehören, über mehrere Leitungsschnittstellen verteilt sein oder es können die einzelnen Nutzkanäle einer einzigen Leitungsschnittstelle verschiedenen Bündeln zugeteilt sein. So kann beispielsweise eine Leitungsschnittstelle 30 Nutzkanäle umfassen, von denen 10 Nutzkanäle dem Bündel 1 und 20 Nutzkanäle dem Bündel 2 zugeordnet sind. Der Zugriff auf eine Leitungsschnittstelle zum Aufbau einer neuen Transaktion erfolgt dabei über eine zentrale Bündelverwaltung.

Unter dem Begriff "Transaktion" werden nachfolgend Nutzkanalund D-Kanal-Verbindungen auf einer Leitungsschnittstelle bezeichnet, die durch eine Transaktionsnummer (TAN bzw. CR) identifiziert werden können. Die Anzahl der auf einer Leitungsschnittstelle realisierbaren Transaktionen ist durch die Systemkapazität, insbesondere die Prozessorleistung und Arbeitsspeicher(RAM)-Ausstattung, begrenzt.

Im Zusammenhang mit der zunehmenden Verbreitung von Telekommunikationsanlagen unterschiedlicher Hersteller steigt auch die Differenziertheit der Systemparameter solcher Anlagen an, insbesondere in der CPU-Leistung und RAM-Ausstattung. Da die einzelnen Telekommunikationsanlagen in ihrer Leistungsfähigkeit stark voneinander abweichen können, ist die maximale Anzahl verwaltbarer Transaktionen für jede Telekommunikationsanlage stark variierend. Eine zentrale Bündelverwaltung hat daher keine Kenntnis über die noch mögliche Anzahl von Transaktionen über diese Telekommunikationsanlage. Es kann dann vorkommen, daß bei hoher Auslastung der Telekommunikationsanlage eine Leitungsschnittstelle zugewiesen wird, die trotz verfügbarer Nutzkanäle keine weiteren Transaktionen verarbeiten kann. Es hat sich weiterhin als sehr nachteilig erwiesen, daß bei zentraler Kapazitätsverwaltung eine dynamische Lastverteilung und eine Prioritätensteuerung nur sehr bedingt möglich sind. Bei einer solchen Verwaltung sind in nachteiliger Weise auch keine Reservierungsmechanismen, z. B. für Nutzkanalverbindungen, realisierbar.

Den genannten Umständen wird zu einem gewissen Grade durch die dezentrale Verwaltung der Transaktionen Rechnung getragen, die der verschiedenen Leistungsfähigkeit (CPU- und RAM-Ausstattung, Konfiguration ...) der einzelnen Systeme und der, hierdurch bedingt, unterschiedlichen Anzahl verwaltbarer Transaktionen in jedem Subsystem und an jeder Leitungsschnittstelle (Interface) Rechnung trägt. Hierbei ist zu beachten, daß die Summe der möglichen Transaktionen an einer Leitungsschnittstelle in der Regel größer ist als die maximale Anzahl möglicher Nutzkanalverbindungen. Mit dieser Handhabung werden die Nachteile der oben erwähnten zentralen Verwaltung bezüglich der Bündel-Verwaltung jedoch nur unzureichend ausgeräumt.

Der Erfindung liegt daher die Aufgabe zugrunde, ein verbessertes Verfahren zum Betrieb einer Telekommunikationsanlage höherer Komplexität bereitzustellen, das eine bessere Kapazitätsauslastung ermöglicht. Weiter soll eine entsprechend verbesserte TK-Anlage bereitgestellt werden.

Ein Verfahren bzw. eine Telekommunikationsanlage gemäss dem Oberbegriff des Anspruchs 1 bzw. 8 ist schon aus US 6,141,343 bekannt.

Diese Aufgabe wird durch ein Verfahren nach Patentanspruch 1 bzw. durch eine Telekommunikationsanlage nach Patentanspruch 8 gelöst.

Die Erfindung schließt den wesentlichen Gedanken eines Abgehens von einer zentralen Verwaltung wesentlicher Systemparameter - darunter insbesondere der Prozessorleistung und Speicherkapazität der Substeuerwerke - ein.

Zweckmäßigerweise wird in dem bündelspezifischen Speicher, parallel zu den gespeicherten Nutzkanälen, eine Liste von Adressen der Leitungsschnittstellen gespeichert. Dabei wird in der Liste auch die Anzahl der physikalisch vorhandenen Anschlußorgane für ein Bündel gespeichert. Die Inhalte dieser Liste verweisen zudem auf den Transaktions-Verteilungs-Speicher, in dem zu jeder physikalischen Adresse eines Anschlußorgans eine Kennzeichnung für belegte bzw. verfügbare Transaktionen auf der Leitungsschnittstelle gespeichert wird. Dies ermöglicht in effizienter Weise eine flexible Verwaltung der vorhandenen Anschlußorgane in Relation zur Bündel-Konfiguration der TK-Anlage bis zur Ebene der einzelnen Transaktionen.

In einer weiteren bevorzugten Ausführung wird in einem zusätzlichen Abschnitt (einer Spalte) der Liste von Adressen der Leitungsschnittstelle ein Verweis auf einen Speicherbereich innerhalb des Transaktions-Verteilungs-Speichers eingetragen, der auf die Kennzeichnung für belegte bzw. verfügbare Transaktionen auf der Leitungsschnittstelle verweist. Im Transaktions-Verteilungs-Speicher wird die Pseudo-Rufnummer gespeichert, die bei verfügbaren Nutzkanälen inkrementiert bzw. bei gesperrten Nutzkanälen dekrementiert wird. Bei einem ersten Eintrag einer Adresse der Leitungsschnittstelle erfolgt für diese Adresse auch eine Initialisierung der verfügbaren Transaktionsnummern für D-Kanal-Verbindungen auf einen Maximalwert.

Wird ein Nutzkanal im Bündel gesperrt oder auch die gesamte Baugruppe außer Betrieb genommen, was einer Sperre aller Nutzkanäle gleichkommt, wird in einer bevorzugten Ausführung der Erfindung überprüft, ob der Nutzkanal im Speicherelement des Transaktions-Verteilungs-Speichers eingetragen ist. Für den Fall, daß der letzte Nutzkanal im Bündel gesperrt ist, wird aus der Liste der gespeicherten Adresse der Leitungsschnittstelle eine jeweilige Hardwareadresse an das zentrale Steuerwerk gesendet und zugleich die Anzahl der verfügbaren Transaktionen für Nutzkanäle und D-Kanal-Verbindungen in dem Transaktions-Verteilungs-Speicher auf "Null" gesetzt.

Bei einem vermittlungstechnischen Aufbau einer Nutzkanalverbindung wird eine in dem Substeuerwerk zur Identifikation von Transaktionen auf der Leitungsschnittstelle vergebene Transaktionsnummer inklusive der Adresse der Leitungsschnittstelle an die Bündelverwaltung gesendet. Außerdem wird die Anzahl bereits vergebener Transaktionsnummern zu dieser Adresse der Leitungsschnittstelle auch an die Bündelverwaltung gesendet. Daraufhin werden die Einträge im Transaktions-Verteilungs-Speicher aktualisiert.

Hingegen wird bei einem Verbindungsabbau eine entsprechende Kennzeichnung über die beendete Transaktion an die Bündelverwaltung gesendet, so daß auch hier die Einträge im Transaktions-Verteilungs-Speicher entsprechend aktualisiert werden können.

Bei einem vermittlungstechnischen Aufbau einer D-Kanal-Verbindung wird hingegen in einem zugeordneten Bündel verglichen, ob in der Liste der Adresse der Leitungsschnittstellen entsprechende Verwaltungseinträge vorhanden sind.

In den zuvor beschriebenen Anwendungen wird davon ausgegangen, daß die Anzahl der verfügbaren Transaktionsnummern immer aus der maximal verfügbaren Anzahl der Transaktionsnummern eines Nutzkanals besteht. Wenn aber eine Aufteilung der Nutzkanäle auf verschiedene Bündel erfolgt, wird in einer bevorzugten Ausführung der Erfindung auch eine Aufteilung der Transaktionsnummern auf die verschiedenen Bündel vorgenommen. In diesem Fall wird während einer Inbetriebnahme-Phase der Telekommunikationsanlage im Transaktions-Verteilungs-Speicher für jedes Bündel ein separates Speicherelement angelegt.

Elemente, denen das gleiche Anschlußorgan zugrundeliegt, werden dann miteinander verkettet. Auf diese Weise ist eine Bestimmung der Gesamtanzahl der Nutzkanäle und eine effiziente Verteilung zwischen den Bündeln möglich. Dabei wird die Summe der verfügbaren Transaktionsnummern eines Anschlußorgans entsprechend verteilt, wobei als Eingangsparameter für die Verteilung die Anzahl der Nutzkanäle dient.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
- Fig. 1: eine Prinzipskizze einer Telekommunikationsanlage mit einem zentralen Steuerwerk und Substeuerwerken,
- Fig. 2: ein Beispiel einer Zuordnung von Datenstrukturen innerhalb eines Bündelspeichers einer Bündelverwaltung,
- Fig. 3: ein Beispiel eines Transaktions-Verteilungs-Speichers,
- Fig. 4: ein Beispiel einer Zuordnung von Datenstrukturen innerhalb eines Bündelspeichers einer Bündelverwaltung, gemäß einer Auführungsform der Erfindung,
- Fig. 5: ein Beispiel eines erweiterten Transaktions-Verteilungs-Speichers und
- Fig. 6A und 6B: zwei Beispiele für den Aufbau eines Bündelspeichers, wobei in Fig. 6B eine Teildarstellung (ohne Bündel 1 und 4) ist.

Die Figuren sind aufgrund der Beschriftung im wesentlichen selbsterklärend, so daß nachfolgend nicht nochmals eine vollständige Beschreibung gegeben, sondern lediglich auf wesentliche Aspekte der jeweiligen Ausführungsform hingewiesen wird.

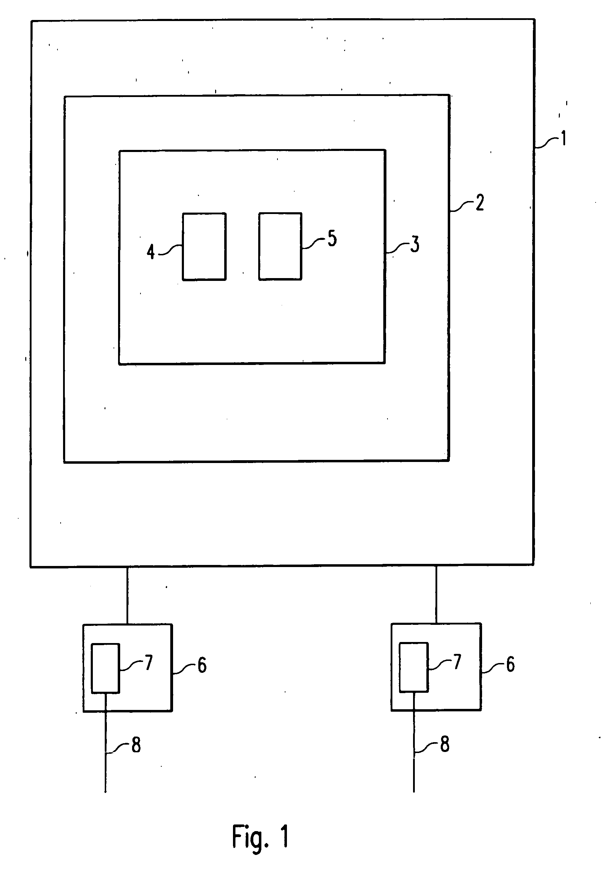

Fig. 1 stellt schematisch eine Telekommunikationsanlage mit dezentraler Steuerungsstruktur dar, die aus einem zentralen Steuerwerk 1 und mehreren damit über Netzleitungen verbundenen Substeuerwerken 6 aufgebaut ist. Die Substeuerwerke 6 stehen mit dem zentralen Steuerwerk 1 in einem der Abwicklung der einzelnen Vermittlungsvorgänge dienenden Austausch von Daten, z. B. von Wahlinformationen, Leitungskennzeichen und Steuer- und Einstellinformationen. Anschlußorgane 8, insbesondere ISDN-Anschlußleitungen, sind an Leitungs-Schnittstellen 7 angeschlossen, die in den Substeuerwerken 6 eingerichtet sind. Eine Verwaltung dieser Anschlußorgane 8 wird in dem zentralen Steuerwerk 1 vorgenommen.

Die Nutzkanäle werden dabei in einem Bündel B zusammengefaßt, wobei die Verwaltung dieser Bündel B in einer Bündelverwaltung 2 des zentralen Steuerwerks 1 vorgenommen wird. Die Bündelverwaltung 2 umfaßt einen Bündelspeicher 3, der für jede Leitung eines Bündels B deren physikalische Adresse im Gesamtsystem enthält. Der Bündelspeicher 3 besteht aus einem allgemeinen Speicher 4 und einem bündelspezifischen Speicher 5. Im bündelspezifischen Speicher 5 sind alle möglichen Nutzkanäle in einer Nutzkanalkette gespeichert abgelegt.

Identifiziert werden die Nutzkanäle eines Anschlußorgans 8 durch Nummern, d. h. die verfügbaren Nutzkanäle werden jeweils mit einem Index versehen gespeichert. Die Zählweise dieser Indexerstellung orientiert sich dabei an einer Rufnummern-Struktur des Telekommunikationssystems. Diese Rufnummern werden im folgenden Pseudo-Rufnummern genannt.

Die Speicher aller Bündel B werden bei Inbetriebnahme der Telekommunikationsanlage initialisiert, und danach werden die verfügbaren Nutzkanäle in den vorgegebenen Bündeln B verkettet. Innerhalb des Substeuerwerks 6 wird dem Anschlußorgan 8 eine Bündelnummer und eine Basisrufnummer zugewiesen. Weitere Nutzkanäle eines Anschlußorgans 8 erhalten fortlaufende Pseudo-Rufnummern. Diese Pseudo-Rufnummern, die Adresse der Leitungsschnittstelle 7 und die Bündelnummer werden an den bündelspezifischen Speicher 5 der Bündelverwaltung 2 übermittelt.

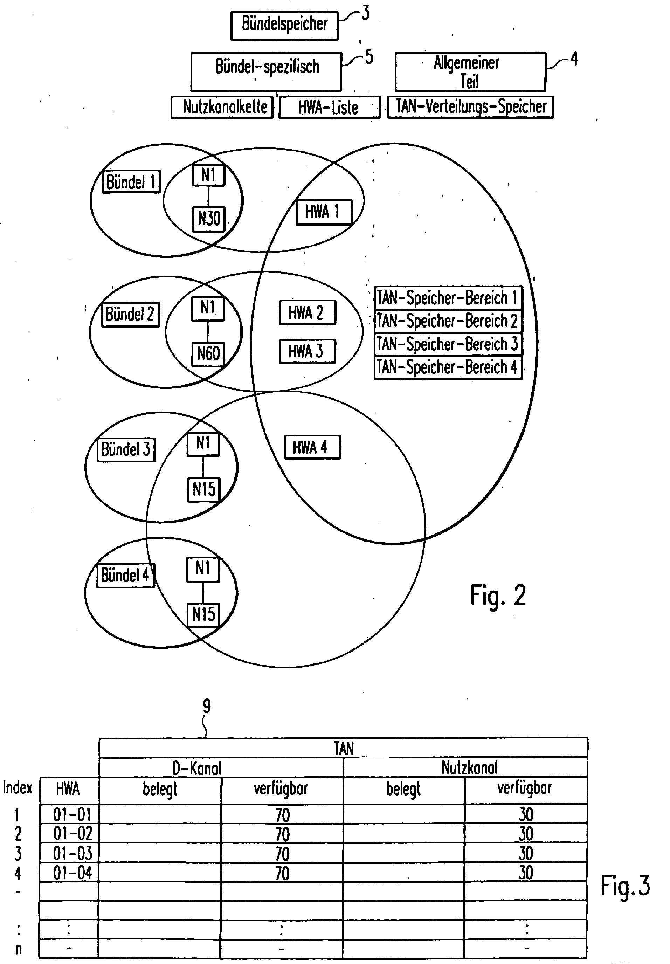

Fig. 2 zeigt ein Beispiel einer Speicherzuordnung innerhalb der Bündelverwaltung 2. Der Bündelspeicher 3 innerhalb der Bündelverwaltung 2 setzt sich auch hier aus einem bündelspezifischen Speicher 5 und einem allgemeinen Speicher 4 zusammen. Im bündelspezifischen Speicher 5 sind die möglichen Nutzkanäle in einer sogenannten Nutzkanalkette abgelegt. Die Nutzkanäle sind dabei jeweils einem Bündel B zugeordnet.

In dem in der Figur gezeigten Beispiel einer Zuordnung der Bündel B sind dem ersten Bündel 30 Nutzkanäle, dem zweiten Bündel 60 Nutzkanäle und dem dritten und vierten Bündel jeweils 15 Nutzkanäle zugeordnet. Der bündelspezifische Speicher 5 hält zudem die Adresse der Leitungsschnittstelle 7 gespeichert. Innerhalb des allgemeinen Speichers 4 befindet sich der Transaktions-Verteilungs-Speicher 9, der Transaktionsnummern 10 speichert, die die Transaktionen auf der Leitungsschnittstelle 7 bezeichnen. Die Transaktionsnummern 10 bestimmen dabei die verfügbaren oder belegten Nutzkanäle, jeweils für eine D-Kanal-Verbindung oder eine Nutzkanalverbindung.

In Fig. 3 ist ein Beispiel dieses Transaktions-Verteilungs-Speichers 9 dargestellt. In diesem Beispiel wird von einer maximal verfügbaren Anzahl von 100 Transaktionen ausgegangen. Diese 100 Transaktionen für eine Leitungsschnittstelle 7 verteilen sich in diesem Beispiel auf 70 Transaktionen für D-Kanal-Verbindungen und 30 Transaktionen für Nutzkanalverbindungen.

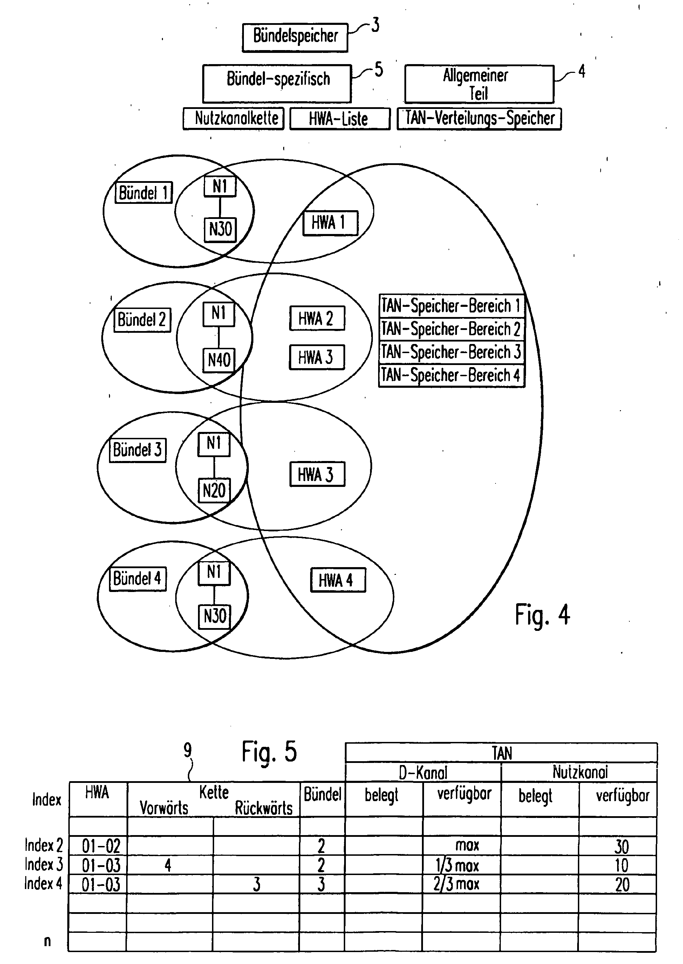

Fig. 4 zeigt ein Beispiel der Zuordnung der Datenstrukturen innerhalb der Bündelverwaltung 3 in einer weiteren Ausführung des erfindungsgemäßen Verfahrens. In diesem Beispiel erfolgt eine Aufteilung der Nutzkanäle auf verschiedene Bündel B. Somit muß auch eine Aufteilung der Transaktionsnummern 10 auf die verschiedenen Bündel B vorgenommen werden. In diesem Beispiel werden die Nutzkanäle des dritten und vierten Bündels jeweils der Adresse der Leitungsschnittstelle 3 und 4 zugeordnet.

Fig. 5 zeigt ein Beispiel eines Transaktions-Verteilungs-Speichers 9 gemäß einer Ausführungsform der Erfindung. In diesem Speicher wird zusätzlich für jede freigegebene Pseudo-Rufnummer ein Zähler für verfügbare Nutzkanäle inkrementiert bzw. beim Sperren dekrementiert.

Bei einem ersten Eintrag einer Adresse der Leitungsschnittstelle 7 in den Speicher der Adressen der Leitungsschnittstellen erfolgt für diese Adresse auch eine Initialisierung der verfügbaren Transaktionsnummern 10 für D-Kanal-Verbindungen auf einen Maximalwert. Wird ein Nutzkanal im Bündel B gesperrt, überprüft ein Programm innerhalb des zentralen Steuerwerkes, ob der Nutzkanal im Speicherelement des Transaktions-Verteilungs-Speichers 9 eingetragen ist. Wird der letzte Nutzkanal im Bündel B gesperrt, wird die Hardwareadresse aus dem Speicher für die Adressen der Leitungsschnittstellen 7 entnommen und die Anzahl der verfügbaren Transaktionsnummern 10 für Nutzkanäle und D-Kanal-Verbindungen auf den Wert "0" gesetzt. Zusätzlich wird im Transaktions-Verteilungs-Speicher 9 für jedes Bündel B ein separates Speicherelement angelegt.

Elemente, denen das gleiche Anschlußorgan 8 zugrundeliegt, werden miteinander verkettet. Somit ist eine Bestimmung der Gesamtanzahl der Nutzkanäle und eine Verteilung zwischen den Bündeln gewährleistet. Die Summe der verfügbaren Transaktionsnummern 10 eines Anschlußorgans 8 wird entsprechend verteilt. Dabei kann als Eingangsparameter für die Verteilung der verfügbaren Transaktionsnummern 10 die Anzahl der Nutzkanäle dienen. In diesem Beispiel werden die Nutzkanäle des zweiten und dritten Bündels auf die Adresse der Leitungsschnittstelle 3 verteilt. Dabei werden 1/3 der Maximalzahl von D-Kanal-Verbindungen auf das zweite Bündel und 2/3 der Maximalzahl von D-Kanal-Verbindungen auf das dritte Bündel verteilt.

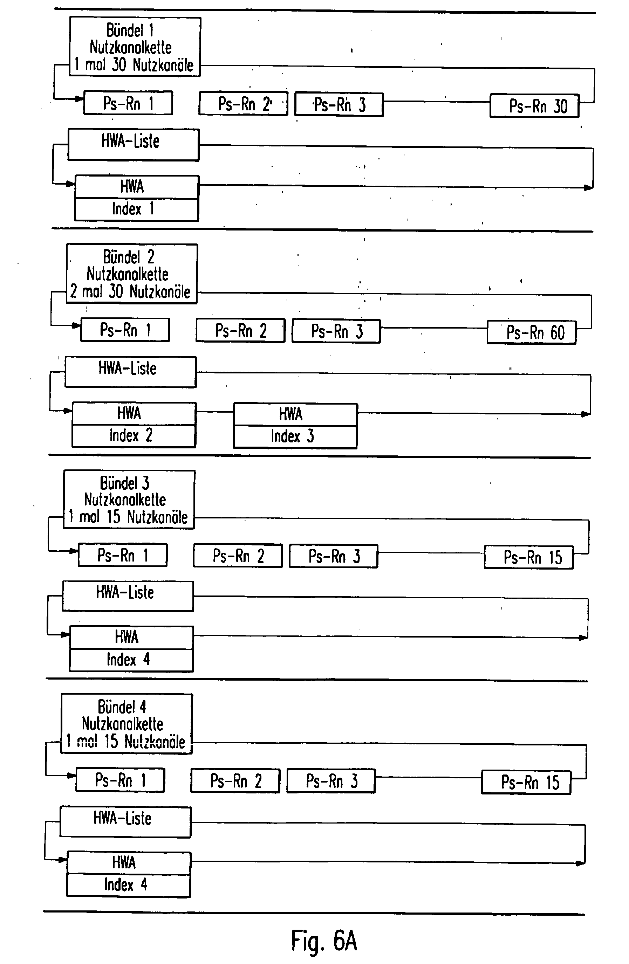

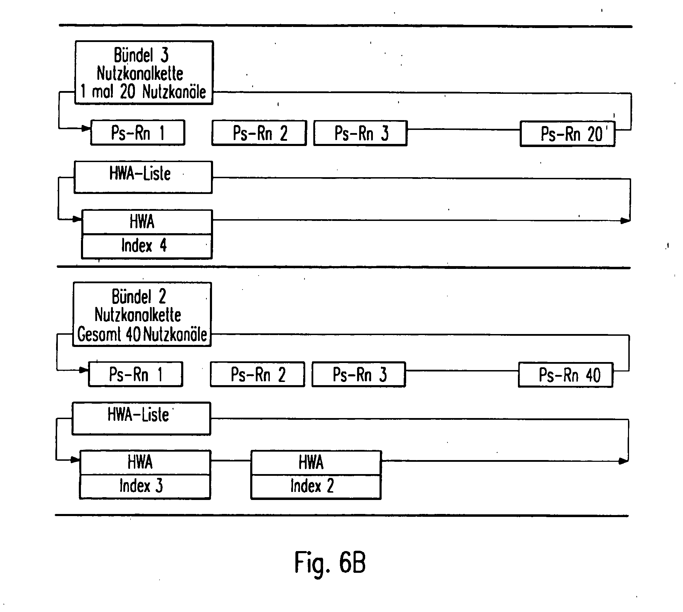

In Fig. 6A und 6B sind zwei Varianten des Aufbaus eines Bündelspeichers dargestellt, die aufgrund der Beschriftung selbsterklärend sind. Hierbei bezeichnen Ps-Rn 1, Ps-Rn 2, ... die weiter oben erwähnten Pseudo-Rufnummern, HWA-Liste die jeweilige Liste der Adressen der zugehörigen Leitungsschnittstellen (HWA) und Index 1, Index 2, ... deren Indizierung.

Die Ausführung der Erfindung ist nicht auf die beschriebenen Beispiele und oben hervorgehobenen Aspekten beschränkt, sondern im Rahmen der Ansprüche ebenso in einer Vielzahl von Abwandlungen möglich, die im Rahmen fachgemäßen Handelns liegen.

### Bezugszeichenliste

- 1: zentrales Steuerwerk
- 2: Bündelverwaltung
- 3: Bündelspeicher
- 4: allgemeiner Speicher
- 5: Bündelspezifischer Speicher
- 6: Substeuerwerk
- 7: Leitungsschnittstelle
- 8: Anschlußorgan
- 9: Transaktions-Verteilungs-Speicher
- 10: Transaktionsnummer
- B: Bündel

## Patentansprüche

1. Verfahren zum Betrieb einer Telekommunikationsanlage zur Ansteuerung einer Vielzahl von in Bündeln (B) zusammengefassten Nutzkanälen, wobei die Telekommunikationsanlage aus einem zentralen Steuerwerk (1) mit einem in einer Bündelverwaltung (2) enthaltenen Bündelspeicher (3), der einen allgemeinen Speicher (4) und einen bündelspezifischen Speicher (5) enthält und aus mehreren über Netzleitungen mit dem zentralen Steuerwerk (1) verbundenen Substeuerwerken (6) mit jeweils mindestens einer Leitungsschnittstelle (7) besteht, an der mindestens ein Anschlussorgan (8), insbesondere eine ISDN-Anschlussleitung, angeschlossen ist, **dadurch gekennzeichnet, dass** in dem bündelspezifischen Speicher (5) eine Liste von Adressen der Leitungsschnittstellen (7) gespeichert ist und in einem im allgemeinen Speicher (4) eingerichteten Transaktions-Verteilungs-Speicher (9) zu jeder Adresse einer Leitungsschnittstelle (7) eine Kennzeichnung für belegte bzw. verfügbare Transaktionen auf der Leitungsschnittstelle (7) gespeichert wird, dass die Verwaltung der Anschlussorgane (8) unter Berücksichtigung dezentral verwalteter Systemparameter, insbesondere Prozessorleistung und Speicherkapazität der Substeuerwerke (6), Ein zentralen Steuerwerk (1) vorgenommen wird und eine in dem Substeuerwerk (6) zur Identifikation von Transaktionen auf der Leitungsschnittstelle (7) vergebene Transaktionsnummer (10) mit der Adresse der Leitungsschnittstelle (7) und der Anzahl bereits vergebener Transaktionsnummern (10) zu dieser Adresse der Leitungsschnittstelle (7) an die Bündelverwaltung (2) gesendet werden.

2. Verfahren nach Anspruch 1,
**dadurch gekennzeichnet, dass** die Liste von Adressen der Leitungsschnittstellen (7) die Anzahl der physikalisch vorhandenen Anschlussorgane (8) für ein Bündel (B) gespeichert hält.

3. Verfahren nach einem der vorangehenden Ansprüche,
**dadurch gekennzeichnet, dass** in einem Speicherbereich innerhalb der Liste von Adressen der Leitungsschnittstellen (7) ein Verweis auf einen Speicherbereich innerhalb des Transaktions-Verteilungs-Speichers (9) eingetragen wird, der auf die Kennzeichnung für belegte bzw. verfügbare Transaktionen auf der Leitungsschnittstelle (7) verweist.

4. Verfahren nach einem der vorangehenden Ansprüche,
**dadurch gekennzeichnet, dass** im Transaktions-Verteilungs-Speicher (9) eine die Nutzkanäle repräsentierende Pseudo-Rufnummer gespeichert wird, die bei verfügbaren Nutzkanäle inkrementiert bzw. für gesperrte Nutzkanäle dekrementiert wird.

5. Verfahren nach einem der vorangehenden Ansprüche,
**dadurch gekennzeichnet, dass** bei einem Abbau des Nutzkanals eine Kennzeichnung der beendeten Transaktion an die Bündelverwaltung (2) gesendet wird.

6. Verfahren nach einem der vorhergehenden Ansprüche,
**dadurch gekennzeichnet, dass** eine Aufteilung der Transaktionsnummern (10) auf die verschiedenen Bündel (B) vorgenommen wird.

7. Verfahren nach einem der vorangehenden Ansprüche,
**dadurch gekennzeichnet, dass** bei der Zusammenfassung der Nutzkanäle auf die verschiedenen Bündel (B) für jedes Bündel im Transaktions-Verteilungs-Speicher (9) ein separates Speicherfeld erzeugt wird.

8. Telekommunikationsanlage zur Durchführung des Verfahrens nach einem der Ansprüche 1 bis 7, die aus einem zentralen Steuerwerk (1) mit einem in einer Bündelverwaltung (2) enthaltenen Bündelspeicher (3), der einen allgemeinen Speicher (4) und einen bündelspezifischen Speicher (5) enthält, und aus mehreren über Netzleitungen mit dem zentralen Steuerwerk (1) verbundenen Substeuerwerken (6) mit jeweils mindestens einer Leitungsschnittstelle (7) besteht, an der mindestens ein Anschlussorgan (8), insbesondere eine ISDN-Anschlussleitung, angeschlossen ist,
**dadurch gekennzeichnet, dass** der bündelspezifische Speicher (5) zum Speichern einer Liste von Adressen der Leitungsschnittstellen (7), die die Anzahl der physikalisch vorhandenen Anschlussorgane (8) für ein Bündel (B) angibt, ausgebildet ist.

9. Telekommunikationsanlage nach Anspruch 8,
**dadurch gekennzeichnet, dass** der allgemeine Speicher (4) einen Transaktions-Verteilungs-Speicher (9) enthält, der zum Speichern einer Kennzeichnung für belegte bzw. verfügbare Transaktionen auf der Leitungsschnittstelle (7) zu jeder physikalischen Adresse eines Anschlussorgans (8) ausgebildet ist.

10. Telekommunikationsanlage nach Anspruch 8 oder 9,
**dadurch gekennzeichnet, dass** die Liste von Adressen der Leitungsschnittstellen (7) einen Abschnitt enthält, der zum Speichern eines Verweises auf einen Speicherbereich innerhalb des Transaktions-Verteilungs-Speichers (9) ausgebildet ist.

11. Telekommunikationsanlage nach einem der Ansprüche 8 bis 10,
**dadurch gekennzeichnet, dass** der Transaktions-Verteilungs-Speicher (9) zum Speicher einer die Nutzkanäle repräsentierenden Pseudo-Rufnummer ausgebildet ist.

12. Telekommunikationsanlage nach einem der Ansprüche 8 bis 11,
**dadurch gekennzeichnet, dass** in den Substeuerwerken (6) Mittel zum Übertragen von Transaktionsnummern (10) mit der Adresse der Leitungsschnittstelle (7) und der Anzahl bereits vergebener Transaktionsnummer (10) zu dieser Adresse der Leistungsschnittstelle (7) an die Bündelverwaltung (2) vorgesehen sind.

13. Telekommunikationsanlage nach einem der Ansprüche 8 bis 12,
**dadurch gekennzeichnet, dass** in den Substeuerwerken (6) Mittel zur Erzeugung eines einen Abbau des Nutzkanals kennzeichnenden Signals und zur Übertragung dieses Signals an die Bündelverwaltung (2) vorgesehen sind.

## Claims

1. A method for operating a telecommunications system for selecting a plurality of traffic channels combined to form trunk groups (B), the telecommunications system consisting of a central control unit (1) with a trunk-group memory (3) which is contained in a trunk-group administration (2) and which contains a general memory (4) and a trunk-specific memory (5), and of several subcontrol units (6), connected via network lines with the central control unit (1), each having at least one line interface (7), on which at least one connection element (8), in particular an ISDN connecting line, is connected, **characterized in that** in the trunk-specific memory (5), a list of addresses of the line interfaces (7) is stored and in a transaction distribution memory (9) set up in the general memory (4), an identifier for occupied or available transactions on the line interface (7) is stored for each address of a line interface (7), **in that** the administration of the connection elements (8) is effected in the central control unit (1) taking into consideration system parameters, in particular processor power and memory capacity of the subcontrol units (6), which are managed in a decentralized manner, and **in that** a transaction number (10) assigned in the subcontrol unit (6) for identifying transactions on the line interface (7), together with the address of the line interface (7) and the number of transaction numbers (10) already assigned for this address of the line interface (7), is sent to the trunk-group administration (2).

2. The method of claim 1,
**characterized in that** the list of addresses of the line interfaces (7) holds the number of physically present connection elements (8) for one trunk group (B) in the memory.

3. The method of any of the preceding claims,
**characterized in that** in a memory area within the list of addresses of the line interfaces (7), a reference to a memory area within the transaction distribution memory (9) is entered, referring to the identifier for occupied or available transactions on the line interface (7).

4. The method of any of the preceding claims,
**characterized in that** in the transaction distribution memory (9), a pseudo subscriber's number representing the traffic channels is stored, which is incremented for available traffic channels and is decremented for blocked traffic channels.

5. The method of any of the preceding claims,
**characterized in that** in case of a cleardown of the traffic channel, an identifier of the terminated transaction is sent to the trunk-group administration (2).

6. The method of any of the preceding claims,
**characterized in that** the transaction numbers (10) are partitioned among the various trunk groups (B).

7. The method of any of the preceding claims,
**characterized in that** upon combination of the traffic channels to form the various trunk groups (B), a separate memory field is generated in the transaction distribution memory (9) for each trunk group.

8. A telecommunications system for carrying out the method of any of claims 1 to 7, consisting of a central control unit (1) with a trunk-group memory (3) which is contained in a trunk-group administration (2) and which contains a general memory (4) and a trunk-specific memory (5), and of several subcontrol units (6), connected via network lines with the central control unit (1), each having at least one line interface (7), on which at least one connection element (8), in particular an ISDN connecting line, is connected, **characterized in that** the trunk-specific memory (5) is designed for storing a list of addresses of the line interfaces (7), said list indicating the number of the physically present connection elements (8) for one trunk group (B).

9. The telecommunications system of claim 8,
**characterized in that** the general memory (4) contains a transaction distribution memory (9) designed for storing an identifier for occupied or available transaction on the line interface (7) for each physical address of a connection element (8).

10. The telecommunications system of claim 8 or 9,
**characterized in that** the list of addresses of the line interfaces (7) contains a section designed for storing a reference to a memory area within the transaction distribution memory (9).

11. The telecommunications system of any of claims 8 to 10,
**characterized in that** the transaction distribution memory (9) is designed for storing a pseudo subscriber's number representing the traffic channels.

12. The telecommunications system of any of claims 8 to 11,
**characterized in that** in the subcontrol units (6), means are provided for transmitting transaction numbers (10) together with the address of the line interface (7) and the number of transaction numbers (10) already assigned for this address of the line interface (7), to the trunk-group administration (2).

13. The telecommunications system of any of claims 8 to 12,
**characterized in that** in the subcontrol units (6), means are provided for generating a signal identifying a cleardown of a traffic channel and for transmitting this signal to the trunk-group administration (2).

## Revendications

1. Procédé pour faire fonctionner un système de télécommunication pour sélectionner une pluralité de canaux utiles réunis de façon à former des faisceaux (B), le système de télécommunication se composant d'une unité centrale de commande (1) avec une mémoire de faisceaux (3) qui est contenue dans une gestion de faisceaux (2) et qui contient une mémoire générale (4) et une mémoire spécifique aux faisceaux (5), et de plusieurs sous-unités de commande (6), connectées par des lignes de réseau avec l'unité centrale de commande (1), chacune d'elles ayant au moins un interface de ligne (7) auquel au moins un organe de connexion (8), en particulier une ligne de connexion ISDN, est connectée,
**caractérisé en ce que**, dans la mémoire de faisceaux (5), une liste d'adresses des interfaces de ligne (7) est mémorisée, et dans une mémoire de distribution de transactions (9) établie dans la mémoire générale (4), un identificateur pour des transactions occupées ou disponibles à l'interface de ligne (7) est mémorisé pour chaque adresse d'un interface de ligne (7), **en ce que** la gestion des organes de connexion (8) s'effectue dans l'unité centrale de commande (1) tenant compte des paramètres de système, en particulier de la puissance du processeur et de la capacité de mémoire des sous-unités de commande (6), qui sont gérées d'une manière décentralisée, et **en ce qu'**un numéro de transaction (10) assigné dans la sous-unité de commande (6) pour identifier de transactions à l'interface de ligne (7), avec l'adresse de l'interface de ligne (7) et le nombre de numéros de transaction (10) déjà assignés pour cette adresse de l'interface de ligne (7), est transmis à la gestion de faisceaux (2).

2. Procédé selon la revendication 1,
**caractérisé en ce que** la liste d'adresses des interfaces de ligne (7) tient dans la mémoire le nombre d'organes de connexion (8) physiquement présents pour un faisceau (B).

3. Procédé selon l'une quelconque des revendications précédentes,
**caractérisé en ce que**, dans une zone de mémoire à l'intérieur de la liste d'adresses des interfaces de ligne (7), une référence à une zone de mémoire à l'intérieur de la mémoire de distribution de transactions (9) est entrée, référant à l'identificateur pour des transactions occupées ou disponibles à l'interface de ligne (7).

4. Procédé selon l'une quelconque des revendications précédentes,
**caractérisé en ce que**, dans la mémoire de distribution de transactions (9), un pseudo-numéro téléphonique représentant les canaux utiles est mémorisé, qui est incrémenté pour les canaux utiles disponibles et est décrémenté pour les canaux utiles bloqués.

5. Procédé selon l'une quelconque des revendications précédentes,
**caractérisé en ce qu'**en cas d'une fermeture du canal utile, un identificateur de la transaction terminée est envoyé à la gestion de faisceaux (2).

6. Procédé selon l'une quelconque des revendications précédentes,
**caractérisé en ce que** les numéros de transaction (10) sont partitionnés sur les divers faisceaux (B).

7. Procédé selon l'une quelconque des revendications précédentes,
**caractérisé en ce que**, lors de la réunion des canaux utiles de façon à former les divers faisceaux (B), un champ de mémoire séparé est généré dans la mémoire de distribution de transactions (9) pour chaque faisceau.

8. Système de télécommunication pour exécuter le procédé selon l'une quelconque des revendications 1 à 7, se composant d'une unité centrale de commande (1) avec une mémoire de faisceaux (3) qui est contenue dans une gestion de faisceaux (2) et qui contient une mémoire générale (4) et une mémoire spécifique aux faisceaux (5), et de plusieurs sous-unités de commande (6), connectées par des lignes de réseau avec l'unité centrale de commande (1), chacune d'elles ayant au moins un interface de ligne (7) auquel au moins un organe de connexion (8), en particulier une ligne de connexion ISDN, est connectée,
**caractérisé en ce que** la mémoire spécifique aux faisceaux (5) est construite pour mémoriser une liste d'adresses des interfaces de ligne (7), dite liste indiquant le nombre des organes de connexion (8) physiquement présents pour un faisceau (B).

9. Système de télécommunication selon la revendication 8,
**caractérisé en ce que** la mémoire générale (4) contient une mémoire de distribution de transactions (9) construite pour mémoriser un identificateur pour des transactions occupées ou disponibles à l'interface de ligne (7) pour chaque adresse physique d'un organe de connexion (8).

10. Système de télécommunication selon la revendication 8 ou 9,
**caractérisé en ce que** la liste d'adresses des interfaces de ligne (7) contient une section construite pour mémoriser une référence à une zone de mémoire à l'intérieur de la mémoire de distribution de transactions (9).

11. Système de télécommunication selon l'une quelconque des revendications 8 à 10,
**caractérisé en ce que** la mémoire de distribution de transactions (9) est construite pour mémoriser un pseudo-numéro téléphonique représentant les canaux utiles.

12. Système de télécommunication selon l'une quelconque des revendications 8 à 11,
**caractérisé en ce que**, dans les sous-unités de commande (6), des moyens sont prévus pour transmettre des numéros de transaction (10) avec l'adresse de l'interface de ligne (7) et le nombre des numéros de transaction (10) déjà assignés pour cette adresse de l'interface de ligne (7), à la gestion de faisceaux (2).

13. Système de télécommunication selon l'une quelconque des revendications 8 à 12,
**caractérisé en ce que**, dans les sous-unités de commande (6), des moyens sont prévus pour générer un signal identifiant une fermeture d'un canal utile et pour transmettre ce signal à la gestion de faisceaux (2).
